# EUROPEAN PATENT SPECIFICATION

(11) **EP 2 712 891 B1**
(45) Date of publication and mention of the grant of the patent: **11.02.2015**
(21) Application number: 13185791.4
(22) Date of filing: 24.09.2013
(51) Int. Cl.: C08L 23/00

(54) **Conductive resin composition**
Leitfähige Harzzusammensetzung
Composition de résine conductrice

(30) Priority: 26.09.2012 KR 20120107327
(43) Date of publication of application: 02.04.2014
(73) Proprietor: Lotte Chemical Corporation of (Sindaebang-dong), Dongjak-gu Seoul 156-711 (KR)
(72) Inventor: Jang, Mi-Ok, Daejeon (KR); Cho, Young-Min, Daejeon (KR); Ko, Sung-rok, Daejeon (KR)
(74) Representative: Willquist, Sofia Ellinor

(56) References cited:
- WO-A1-2004/029133
- US-A1- 2008 020 208

## Description

### FIELD OF THE INVENTION

The present invention relates to a conductive resin composition. More particularly, the present invention relates to a conductive resin composition having high conductivity and heat resistance together with excellent antistatic properties while securing high compatibility between respective components.

### BACKGROUND OF THE INVENTION

Recently, with the trend toward lighter, thinner, and smaller electronic devices and electronic components, the degree of integration of electronic elements has been increasing, and the amount of electromagnetic radiation generated therefrom has been also remarkably increasing. In addition, the amount of static electricity generated in electronic devices and electronic components has also been significantly increasing. Electromagnetic waves may leak through joints or connectors of electronic devices, thereby inducing malfunction of other electronic elements or electronic components, or causing noxious effects such as weakening of the human immune system and the like. Further, static electricity generated in electronic devices and electronic components may cause deterioration or damage to functions of products themselves.

Accordingly, various studies have been conducted to develop measures capable of effectively shielding, removing, or absorbing electromagnetic radiation or static electricity causing malfunction of electronic elements and providing adverse effects on human health. For example, in order to shield, remove, or absorb electromagnetic radiation or static electricity, methods for coating a conductive material on exterior parts or methods for mixing a conductive material with a polymer resin have been previously known.

Specifically, there methods have been known for coating a surface of final products with conductive dyes, such as carbon black and the like, or methods for preparing a final resin molded article by mixing a polymer resin with conductive dyes, such as carbon black and the like. However, in the case of coating the surface of final products with the conductive dyes, electrostatic dispersibility or conductivity can be lost if the coated surface is damaged. Moreover, in the case of mixing the polymer resin with the conductive dyes, the amount of conductive dyes added is greatly increased in order to secure electrostatic dispersibility or conductivity required for final products. Further, compatibility with the polymer resin may be significantly deteriorated or the conductive dye may be sloughed off from the surface after molding of final products, thereby causing contamination of electronic products or electronic elements.

Furthermore, polymer resin materials filled with various conductive fillers have been introduced in order to realize thermal conductivity and electromagnetic radiation absorption properties required for recent electronic devices. However, such methods have problems in that fillers are difficult to use over a certain amount due to compatibility and the like, and mechanical properties of polymer resin materials and conductivity or antistatic properties of products are deteriorated when the filler content is increased.

Specifically, various materials in which conductive carbon structures such as carbon nanotubes, carbon fibers, graphene, and the like are added to polymer resins have been introduced. However, these conductive carbon structures are known to have some limitations in that compatibility with polymer resins or other materials is not high in spite of their high conductivity, and it is difficult for the conductive carbon structures to satisfy heat resistance together with conductivity or antistatic properties. For example, Korean Patent No. 0532032 discloses a method for mixing a polyolefin resin modified with fluorine compounds with a conductive carbon structure. However, this method has limitations in that the properties of the polyolefin resin itself are not properly exhibited or the conductive carbon structure used needs to be modified.

### SUMMARY OF THE INVENTION

It is an object of the present invention to provide a conductive resin composition having high conductivity and heat resistance together with excellent antistatic properties while securing high compatibility between respective components.

The present invention provides a conductive resin composition including: a polyolefin resin; a compatibilizer selected from the group consisting of a modified polyolefin grafted with ethylene acrylate, dicarboxylic acid or an acid anhydride thereof, ethylene vinyl acetate, ethylene vinyl alcohol, and an acrylate copolymer; and polyaniline nanofibers having a cross-sectional diameter of 1 nm to 100 nm and a length of 0.05 µm to 2 µm.

### DETAILED DESCRIPTION OF THE EMBODIMENTS

Hereinafter, the conductive resin composition according to exemplary embodiments of the present invention will be described in more detail.

According to one embodiment of the present invention, a conductive resin composition may include: a polyolefin resin; a compatibilizer selected from the group consisting of a modified polyolefin grafted with ethylene acrylate, dicarboxylic acid or an acid anhydride thereof, ethylene vinyl acetate, ethylene vinyl alcohol, and an acrylate copolymer; and polyaniline nanofibers having a cross-sectional diameter of 1 nm to 100 nm and a length of 0.05 µm to 2 µm.

The present inventors conducted earnest research to develop a material having high heat resistance together with improved conductivity or antistatic properties, and found that a resin composition prepared by mixing the specific compatibilizer and polyaniline nanofibers with the polyolefin resin has high conductivity and heat resistance together with excellent antistatic properties while securing high compatibility between respective components. The present invention has been accomplished on the basis of this finding.

As used herein, the term "conductive resin composition" means a conductive polymer resin composition or a conductive polyolefin resin composition.

The resin composition may include the polyolefin resin, compatibilizer, and polyaniline nanofibers in a mixed state. Further, the polyolefin resin, compatibilizer, and polyaniline nanofibers may also be included in the resin composition in a melted and compounded state.

That is, the highly heat resistant conductive resin composition may include a melt compounded material of the polyolefin resin, the compatibilizer, and the polyaniline nanofibers. Melting may be performed at not less than 100 °C or at a temperature ranging from 150 °C to 270 °C. More specifically, the melt compounding may be performed using a twin-screw extruder or the like.

The conductive resin composition may include 40 wt% to 99.5 wt% of the polyolefin resin, 0.1 wt% to 30 wt% of the compatibilizer, and 0.1 wt% to 50 wt% of the polyaniline nanofibers.

When the content of the compatibilizer is less than 0.1 wt% in the conductive resin composition, compatibility between the polyolefin resin and the polyaniline nanofibers can be significantly decreased, thereby causing remarkable reduction in mechanical properties, heat resistance, or conductivity of final products. In addition, when the content of the compatibilizer is greater than 30 wt%, the content of the polyolefin resin can be reduced, thereby preventing demonstration of inherent properties of the resin, or the content of the polyaniline nanofibers can be reduced, thereby making it difficult to secure heat resistance or conductivity.

When the content of the polyaniline nanofibers is less than 0.1 wt% in the conductive resin composition, the resin composition or final products prepared therefrom cannot sufficiently exhibit heat resistance, conductivity, or antistatic properties. Further, when the content of the polyaniline nanofibers is greater than 30 wt%, compatibility with the polyolefin resin can be significantly reduced, thereby remarkably deteriorating mechanical properties, heat resistance, or conductivity of final products. The polyolefin resin has a relatively low specific gravity, and excellent chemical resistance, water proofing properties, and electric properties, and thus can be easily applied to materials or molded articles for electronic devices and electronic components.

Specifically, the polyolefin resin may include low-density polyethylene, high-density polyethylene, polypropylene, propylene copolymers, or mixtures thereof.

The low-density polyethylene may have a density of 0.890 g/cm³ to 0.940 g/cm³, and may have many branched chains and low crystallinity. The high-density polyethylene may have a density of 0.940 g/cm³ to 0.980 g/cm³, and may have fewer branched chains and high crystallinity.

As the polypropylene resin, typical polypropylene polymers applicable to resin molded articles may be employed without limitation. However, it is preferred to use polypropylene resins having a melt index of 1 g/10 min to 100 g/10 min (ASTM D1238, 230 °C). If the melt index of the polypropylene resin is less than 1 g/10 min (ASTM D1238, 230 °C), it can be difficult to secure sufficient processability during molding procedures, and dispersion of the polyaniline nanofibers can be disturbed due to such high viscosity. Further, if the melt index of the polypropylene resin is greater than 100 g/10 min (ASTM D1238, 230 °C), it can be difficult for final products to have suitable impact strength due to low viscosity, thereby causing a decrease in other mechanical properties.

The propylene copolymer may include ethylene-propylene copolymers or butadiene-propylene copolymers. The ethylene-propylene copolymer or the butadiene-propylene copolymer may be a block copolymer in which an ethylene repeating unit and a propylene repeating unit, or an ethylene repeating unit and a propylene repeating unit, form a block, or a random copolymer in which the repeating units are randomly arranged. The propylene copolymer may have a weight average molecular weight of 30,000 to 500,000.

Examples of the compatibilizer may include modified polyolefin resins grafted with ethylene acrylate, dicarboxylic acid or an acid anhydride thereof, ethylene vinyl acetate, ethylene vinyl alcohol, an acrylate copolymer, or mixtures thereof.

These compatibilizers may facilitate mixing of the polyolefin resin with the polyaniline nanofibers, allow uniform dispersion in the resin composition, and prevent respective components from separating or delaminating during melt compounding or molding procedures for final products.

Specifically, the ethylene acrylate may be a random copolymer in which an ethylene repeating unit and an acrylic acid repeating unit are randomly arranged, and have an acid value of 1 mg KOH/g to 150 mg KOH/g.

The ethylene vinyl acetate may be a random copolymer in which an ethylene repeating unit and a vinyl acetate repeating unit are randomly arranged, and may include 1 wt% to 50 wt% of the vinyl acetate repeating unit. The ethylene vinyl acetate may have a density of 0.924 g/cm³ to 0.960 g/cm³ depending on the content of the vinyl acetate.

The ethylene vinyl alcohol may be a random copolymer in which an ethylene repeating unit and a vinyl alcohol repeating unit are randomly arranged, and may include 1 wt% to 50 wt% of the vinyl alcohol repeating unit. The ethylene vinyl alcohol may have a density of 0.930 g/cm³ to 0.970 g/cm³ depending on the content of the vinyl alcohol.

The acrylate copolymer represents a copolymer formed from (meth)acrylic acid [CH₂=CH-COOR or CH₂=C(CH₃) -COOR], wherein the R group in the (meth)acrylic acid may determine the properties of the copolymer. The acrylate copolymer may be a copolymer of a polymer, such as acrylic fibers, esters, and amides, and a polymer derived from (meth)acrylic acid. The acrylate copolymer may have various physical properties depending on the content of the acrylate. As used herein, the term "(meth)acryl-" includes both acryl- and (meth)acryl-.

The expression "modified polyolefin resin grafted with dicarboxylic acid or an acid anhydride thereof" refers to a polymer in which the dicarboxylic acid or an acid anhydride thereof is grafted to a polyolefin backbone to form branched chains.

Further, in order to improve compatibility between respective components and physical properties of final products to be prepared, examples of the dicarboxylic acid may include maleic acid, phthalic acid, itaconic acid, citraconic acid, alkenyl succinic acid, cis-1,2,3,6-tetrahydrophthalic acid, 4-methyl-1,2,3,6-tetrahydrophthalic acid, or mixtures thereof. The dianhydride of the dicarboxylic acid may be dianhydrides of the aforementioned dicarboxylic acids.

The grafted dicarboxylic acid or the acid anhydride thereof may be present in an amount of 1 wt% or more, preferably 2 wt% to 20 wt%, in the modified polyolefin resin. As the dicarboxylic acid or an acid anhydride thereof is grafted to the polyolefin resin in an amount of 1 wt% or more, interface strength between the polyolefin resin and the polyaniline nanofibers can be improved, and the resin composition finally prepared can secure mechanical properties such as higher stiffness, impact strength, and the like, together with excellent heat resistance and conductivity.

The rate for such dicarboxylic acid or acid anhydride thereof to be grafted may be measured through acid-base titration results of the modified polyolefin resin. For example, the amount of dicarboxylic acid grafted to the modified polypropylene resin may be calculated as follows: about 1 g of the modified polypropylene resin is introduced to 150 ml of xylene saturated with water, followed by refluxing for about 2 hours. To this, a small amount of 1 wt% thymol blue-dimethylformamide solution is added, followed by titration using a 0.05 N sodium hydroxide-ethyl alcohol solution to obtain a navy blue solution. The solution is back titrated again with the use of a 0.05 N hydrochloric acid-isopropyl alcohol solution until the solution turns yellow, thereby determining an acid value. From the acid value, the amount of dicarboxylic acid grafted to the modified polypropylene resin can be calculated.

Although the polyolefin resin grafted with the dicarboxylic acid or an acid anhydride thereof is not particularly limited, polyethylene resins or polypropylene resins may be advantageous in terms of improvement in compatibility and physical properties. The polyolefin resin may have a weight average molecular weight of 30,000 to 800,000.

The polyaniline nanofibers may have a cross-sectional diameter of 1 nm to 100 nm, preferably 10 nm to 80 nm, and a length of 0.05 µm to 2 µm, preferably 0.1 µm to 1.5 µm. As used herein, the term "cross-sectional diameter" refers to a maximum diameter that the cross-sectional shape of the polyaniline nanofibers has.

In order for the polyaniline nanofibers to have higher compatibility with the polyolefin resin or compatibilizer while realizing high conductivity, antistatic properties, and heat resistance, a dopant including a sulfonic acid compound or a salt thereof is preferably adsorbed to a surface thereof.

The polyaniline nanofiber, the surface of which is adsorbed with a dopant including a sulfonic acid compound or a salt thereof, may be provided by a method including: mixing and polymerizing a dopant including an aniline monomer and an inorganic acid with an oxidizing agent; dedoping the resulting material of the polymerization step with a basic compound; and reacting the resulting material of the dedoping step with a dopant including a sulfonic acid compound or a salt thereof.

As the dopant including an aniline monomer and an inorganic acid is dispersed in an aqueous solution, hydrogen ions of the inorganic acid are bound to the aniline monomer to form a micelle of anilinium of the aniline.

After dispersing the dopant including the aniline monomer and the inorganic acid in the aqueous solution, an oxidizing agent is added to the dispersant, thereby initiating polymerization of the polyaniline nanofibers.

The resulting material of the polymerization step, namely, the polyaniline nanofibers to which the dopant of the inorganic acid is introduced (doped), may be reacted with the basic compound, thereby dedoping the dopant of the inorganic acid.

The resulting material of the dedoping step may be reacted with a dopant including a sulfonic acid compound or a salt thereof, thereby providing polyaniline nanofibers the surface of which is adsorbed with the dopant including the sulfonic acid compound or the salt thereof.

The resulting polyaniline nanofibers, the surface of which is adsorbed with the dopant including the sulfonic acid compound or the salt thereof, can be clearly differentiated from the polyaniline nanofibers obtained by simply doping an inorganic acid and having electrical conductivity of a certain degree, but showing significantly deteriorated heat resistance.

Specifically, the polyaniline nanofibers, the surface of which is adsorbed with the dopant including the sulfonic acid compound or the salt thereof, may have a thermal decomposition temperature of 200 °C or more, or 220 °C to 500 °C, and electrical conductivity of 10⁻⁸ S/cm or more, or 10⁻⁸ S/cm to 10 S/cm, at room temperature.

The thermal decomposition temperature refers to a temperature at which the dopant adsorbed to the polyaniline nanofibers in a salt form starts to evaporate, decompose, or be removed after the residual solvent or remaining monomers and the like are evaporated and removed. Such thermal decomposition temperature, as used herein, refers to a first sharp inflection point in a graph obtained via thermogravimetric analysis (TGA). For example, the thermal decomposition temperature may be a temperature at which the rate of change of a slope in a graph representing weight change in accordance with temperature reaches maximum. Here, room temperature refers to a temperature ranging from 10 °C to 40 °C.

Examples of the sulfonic acid compound may include dodecyl sulfonic acid, camphor sulfonic acid, polystyrene sulfonic acid, or a mixture thereof. Metal salts (for example, sodium salts or potassium salts) or ammonium salts of such sulfonic acid compounds may also be used.

Although the inorganic acid capable of being used in the polymerization step is not particularly limited, examples of the inorganic acid may include hydrochloric acid, nitric acid, sulfuric acid, benzene sulfonic acid, dodecyl sulfonic acid, camphor sulfonic acid, toluene sulfonic acid, or mixtures thereof.

The oxidizing agent may serve as a polymerization initiator. Examples of the oxidizing agent may include persulfates, iodates, chlorates, dichromates, metal chlorides, peroxydisulfates, or mixtures thereof, without being limited thereto.

The compound capable of being used as the basic compound is not particularly limited, but any compound capable of dedoping the dopant of the inorganic acid may be used without limitation. For example, ammonium hydroxide, sodium hydroxide, lithium hydroxide, barium hydroxide, potassium hydroxide, calcium hydroxide, or mixtures thereof may be used.

The highly heat resistant conductive resin composition may further include additives, such as impact modifiers, ultraviolet stabilizers, heat stabilizers, antioxidants, and the like.

The highly heat resistant conductive resin composition may realize high conductivity and excellent antistatic properties. Specifically, the highly heat resistant conductive resin composition may have surface resistance of 1.0 x 10¹² Ω/sq or less, or 1.0 x 10¹² Ω/sq to 1.0 x 10² Ω/sq.

The use of the resin composition may provide resin molded articles, polymer films, and the like having high conductivity, heat resistance, and antistatic properties together with excellent mechanical properties. Such resin molded articles or polymer films may be employed in fields such as conductive films, electrostatic dispersion foams, electrostatic dispersion sheets, electrostatic dispersion injection molded articles, and the like.

According to the present invention, it is possible to provide a conductive resin composition having high conductivity and heat resistance together with excellent antistatic properties while securing high compatibility between respective components. By use of the resin composition, it is also possible to provide a resin molded article having high conductivity, heat resistance, and antistatic properties together with excellent mechanical properties.

Now, the present invention will be described in more detail with reference to the following examples. These examples are provided for illustration only and are not to be in any way construed as limiting the present invention.

### [Preparative Example: Preparation of polyaniline nanofibers]

To a 5 L reactor, 2 L of distilled water was added, followed by adding as a dopant 1.4 mole of hydrochloric acid dropwise while stirring at 150 rpm. To this, 1.1 mole of an aniline monomer was added dropwise. After stirring for 30 minutes such that anilinium ions generated by hydrogen ions dissociated from hydrochloric acid sufficiently form micelles, 0.53 mole of ammonium persulfate as an initiator was added dropwise. Subsequently, after about 1 minute, the color of the solution changed from colorless to dark green, from which the initiation of polymerization was confirmed. After stirring for about 2 hours, 3 L of ethanol was poured thereto to terminate the reaction.

The resulting material of the reaction was dispersed in 1.5 L of distilled water, followed by adding 1.1 mole of ammonium hydroxide and stirring for about 30 minutes. The extra ammonia water was washed with ethanol. The resulting material was dispersed in ethanol, followed by adding 1.2 mole of dodecylbenzene sulfonate (DBSA) and stirring. The resulting material was washed once with ethanol and acetone, respectively, and then dried in an oven at 90 °C to prepare polyaniline nanofibers (cross-sectional diameter: 500 nm, length: 1 µm, room temperature conductivity: 1 S/cm, thermal decomposition temperature: 300 °C), the surface of which was adsorbed with a dopant of dodecylbenzene sulfonate.

### [Examples and Comparative Examples: Preparation of resin composition]

### Example 1

A low density polyethylene, polyaniline nanofibers the surface of which were adsorbed with a dopant of dodecylbenzene sulfonate, and 20 parts by weight of ethylene acrylate (EAA, acid value: 70 mg KOH/g) as a compatibilizer were mixed in amounts as shown in Table 1. Then, the mixture was melted and compounded using a 40 mm twin screw extruder to prepare 5 kg of a resin composition. The resin composition was dried in an oven at 90°C and then molded using a Brabender film mold to prepare a polymer film.

### Examples 2 to 4

A resin composition and a polymer film were prepared in the same manner as in Example 1, except that components or contents were changed as shown in Table 1.

### Comparative Example 1

A resin composition and a polymer film were prepared in the same manner as in Example 1, except that a compatibilizer was not used as shown in Table 1.

### Comparative Example 2

A resin composition and a polymer film were prepared in the same manner as in Example 1, except that the polyaniline nanofibers were not used, as shown in Table 1.

### [Experimental Example: Measurement of surface resistance of polymer film]

The surface resistance of the polymer films obtained in the examples and comparative examples was measured using a surface resistance meter (R8340, Advantest Corp.) at 55 % RH, 23 °C, and 500 V applied voltage and a ring electrode in accordance with ASTM D257.

The resin compositions prepared in the examples and comparative examples and results of experimental example are summarized in Table 1.

**[Table 1] Resin compositions of examples and comparative examples and results of experimental example**

| Component | Resin (wt%) | Polyaniline nanofibers of Preparative Example (wt%) | Compatibilizer (wt%) | Surface resistance (Ω/sq) |
|---|---|---|---|---|
| Example 1 | LD (80) | 2.5 | EAA (17.5) | 2.5E+09 |
| Example 2 | LD (92.5) | 2.8 | EAA (4.7) | 4.0E+09 |
| Example 3 | LD (80) | 2.5 | PE-g-MAH (17.5) | 7.0E+09 |
| Example 4 | PP (80) | 2.5 | PP-g-MAH (17.5) | 1.0E+09 |
| Comparative Example 1 | LD (97) | 3 | - | 2.2E+10 |
| Comparative Example 2 | LD (83) | - | EAA (17) | 5.1E+15 |

| | | | | |
|---|---|---|---|---|
| a) LD: Low Density Polyethylene (Melt index of 1.1 g/10 min - ASTM D1238, 230 °C) b) PP: Polypropylene Resin (Melt index of 35 g/10 min - ASTM D1238, 230 °C) c) PE-g-MAH (Modified Polyethylene Resin): Polyethylene having a molecular weight of 50,000 and grafted with 4.75 % of maleic acid anhydride d) Ethylene acrylic acid (EAA, acid value: 70 mg KOH/g) | | | | |

As shown in Table 1, it was confirmed that the polymer resin films prepared in Examples 1 to 4 had lower surface resistance than those of Comparative Examples 1 and 2, to which the compatibilizer or the polyaniline nanofibers of the preparative example was not added. In addition, as a result of observing the surface of the polymer resin films prepared in Examples 1 to 4, it could be seen that the films had a uniform overall thickness and no domain was formed by agglomeration of certain components.

That is, the use of the resin compositions of the examples may provide polymer films having high conductivity and heat resistance together with excellent antistatic properties while securing high compatibility between respective components.

## Claims

1. A conductive resin composition, comprising:
a polyolefin resin;
a compatibilizer selected from the group consisting of modified polyolefin grafted with ethylene acrylate, dicarboxylic acid or an acid anhydride thereof, ethylene vinyl acetate, ethylene vinyl alcohol, and an acrylate copolymer; and
polyaniline nanofibers having a cross-sectional diameter of 1 nm to 100 nm and a length of 0.05 µm to 2 µm.

2. The conductive resin composition according to claim 1, comprising:
a melt compounded material of the polyolefin resin, the compatibilizer, and the polyaniline nanofibers.

3. The conductive resin composition according to claim 1, comprising:
40 wt% to 99.5 wt% of the polyolefin resin;
0.1 wt% to 30wt% of the compatibilizer; and
0.1 wt% to 50wt% of the polyaniline nanofibers.

4. The conductive resin composition according to claim 1, wherein
the polyolefin resin comprises at least one polymer resin selected from the group consisting of low density polyethylene, high density polyethylene, polypropylene, propylene copolymers, or mixtures thereof.

5. The conductive resin composition according to claim 1, wherein
the dicarboxylic acid or acid anhydride thereof is present in an amount of 1 wt% or more in the modified polyolefin resin grafted with the dicarboxylic acid or acid anhydride thereof.

6. The conductive resin composition according to claim 1, wherein
the ethylene acrylate comprises a random copolymer comprising an ethylene repeating unit and an acrylic acid repeating unit.

7. The conductive resin composition according to claim 1, wherein
the ethylene vinyl acetate comprises a random copolymer comprising an ethylene repeating unit and a vinyl acetate repeating unit and having a density of 0.924 g/cm³ to 0.960 g/cm³.

8. The conductive resin composition according to claim 1, wherein
the ethylene vinyl alcohol comprises a random copolymer comprising an ethylene repeating unit and a vinyl alcohol repeating unit and having a density of 0.930 g/cm³ to 0.970 g/cm³.

9. The conductive resin composition according to claim 1, wherein
the polyaniline nanofibers comprise polyaniline nanofibers, the surface of which is adsorbed with a dopant comprising a sulfonic acid compound or a salt thereof.

10. The conductive resin composition according to claim 1, wherein
the polyaniline nanofibers have electrical conductivity of 10⁻⁸ S/cm or more at room temperature.

11. The conductive resin composition according to claim 1, wherein the polyaniline nanofibers have a thermal decomposition temperature of 200 °C or more.

12. The conductive resin composition according to claim 1,
having surface resistance of 1.0 x 10¹² Ω/sq or less.

## Patentansprüche

1. Leitfähige Harzzusammensetzung umfassend:
ein Polyolefinharz;
einen Kompatibilisator ausgewählt aus der Gruppe bestehend aus modifiziertem Polyolefin, das mit Ethylenacrylat, Dicarbonsäure oder einem Säureanhydrid davon gepfropft ist, Ethylenvinylacetat, Ethylenvinylalkohol und einem Acrylatcopolymer; und
Polyanilinnanofasern, die einen Querschnittsdurchmesser von 1 nm bis 100 nm und eine Länge vom 0,05 µm bis 2 µm aufweisen.

2. Leitfähige Harzzusammensetzung nach Anspruch 1, umfassend:
ein schmelzcompoundiertes Material aus dem Polyolefinharz, dem Kompatibilisator und den Polyanilinnanofasern.

3. Leitfähige Harzzusammensetzung nach Anspruch 1, umfassend:
40 Gew.-% bis 99,5 Gew.-% des Polyolefinharzes;
0,1 Gew.-% bis 30 Gew.-% des Kompatibilisators; und
0,1 Gew.-% bis 50 Gew.-% der Polyanilinnanofasern.

4. Leitfähige Harzzusammensetzung nach Anspruch 1, wobei
das Polyolefinharz mindestens ein Polymerharz umfasst ausgewählt aus der Gruppe bestehend aus Polyethylen niedriger Dichte, Polyethylen hoher Dichte, Polypropylen, Propylencopolymeren und Mischungen davon.

5. Leitfähige Harzzusammensetzung nach Anspruch 1, wobei
die Dicarbonsäure oder das Säureanhydrid davon in einer Menge von 1 Gew.-% oder mehr in dem modifizierten Polyolefinharz, das mit der Dicarbonsäure oder dem Säureanhydrid davon gepfropft ist, vorliegt.

6. Leitfähige Harzzusammensetzung nach Anspruch 1, wobei
das Ethylenacrylat ein statistisches Copolymer umfasst, das eine Ethylenwiederholungseinheit und eine Acrylsäurewiederholungseinheit umfasst.

7. Leitfähige Harzzusammensetzung nach Anspruch 1, wobei
das Ethylenvinylacetat ein statistisches Copolymer umfasst, das eine Ethylenwiederholungseinheit und eine Vinylacetatwiederholungseinheit umfasst und eine Dichte von 0,924 g/cm³ bis 0,960 g/cm³ aufweist.

8. Leitfähige Harzzusammensetzung nach Anspruch 1, wobei
der Ethylenvinylalkohol ein statistisches Copolymer umfasst, das eine Ethylenwiederholungseinheit und eine Vinylalkoholwiederholungseinheit umfasst und eine Dichte von 0,930 g/cm³ bis 0,970 g/cm³ aufweist.

9. Leitfähige Harzzusammensetzung nach Anspruch 1, wobei
die Polyanilinnanofasern Polyanilinnanofasern umfassen, an deren Oberfläche ein Dotiermittel adsorbiert ist, das eine Sulfonsäureverbindung oder ein Salz davon umfasst.

10. Leitfähige Harzzusammensetzung nach Anspruch 1, wobei die Polyanilinnanofasern eine elektrische Leitfähigkeit von 10⁻⁸ S/cm oder mehr bei Raumtemperatur aufweisen.

11. Leitfähige Harzzusammensetzung nach Anspruch 1, wobei
die Polyanilinnanofasern eine Wärmezersetzungstemperatur von 200 °C oder mehr aufweisen.

12. Leitfähige Harzzusammensetzung nach Anspruch 1, die eine Oberflächenresistenz von 1,0 x 10¹² Ω/sq oder weniger aufweist.

## Revendications

1. Composition de résine conductrice comprenant :
une résine polyoléfinique ;
un agent de compatibilité sélectionné dans le groupe constitué par une polyoléfine modifiée greffée avec de l'acrylate-éthylène, un acide dicarboxylique ou un anhydride acide de celui-ci, un acétate de vinyle-éthylène, un alcool vinylique-éthylène et un copolymère d'acrylate ; et
des nanofibres de polyaniline ayant un diamètre en coupe transversale de 1 nm à 100 nm et une longueur de 0,05 µm à 2 µm.

2. Composition de résine conductrice selon la revendication 1, comprenant :
une substance mélangée fondue de la résine polyoléfinique, de l'agent de compatibilité et des nanofibres de polyaniline.

3. Composition de résine conductrice selon la revendication 1, comprenant :
de 40 % en poids à 99,5 % en poids de la résine polyoléifnique ;
de 0,1 % en poids à 30 % en poids de l'agent de compatibilité ; et
de 0,1 % en poids à 50 % en poids des nanofibres de polyaniline.

4. Composition de résine conductrice selon la revendication 1, dans laquelle :
la résine polyoléfinique comprend au moins une résine polymère sélectionnée dans le groupe constitué par le polyéthylène basse densité, le polyéthylène haute densité, le polypropylène, les copolymères de propylène ou des mélanges de ceux-ci.

5. Composition de résine conductrice selon la revendication 1, dans laquelle
l'acide dicarboxylique ou un anhydride acide de celui-ci est présent en une quantité de 1 % en poids ou plus dans la résine polyoléfinique modifiée greffée avec l'acide dicarboxylique ou un anhydride acide de celui-ci.

6. Composition de résine conductrice selon la revendication 1, dans laquelle
l'acrylate-éthylène comprend un copolymère aléatoire comprenant un motif répétitif d'éthylène et un motif répétitif d'acide acrylique.

7. Composition de résine conductrice selon la revendication 1, dans laquelle
l'acétate de vinyle-éthylène comprend un copolymère aléatoire comprenant un motif répétitif d'éthylène et un motif répétitif d'acétate de vinyle et ayant une densité de 0,924 g/cm³ à 0,960 g/cm³.

8. Composition de résine conductrice selon la revendication 1, dans laquelle
l'alcool vinylique-éthylène comprend un copolymère aléatoire comprenant un motif répétitif d'éthylène et un motif répétitif d'alcool vinylique et ayant une densité de 0,930 g/cm³ à 0,970 g/cm³.

9. Composition de résine conductrice selon la revendication 1, dans laquelle
les nanofibres de polyaniline comprennent des nanofibres de polyaniline dont la surface absorbe un dopant comprenant un composé d'acide sulfonique ou un sel de celui-ci.

10. Composition de résine conductrice selon la revendication 1, dans laquelle
les nanofibres de polyaniline ont une conductivité électrique de 10⁻⁸ S/cm ou plus à température ambiante.

11. Composition de résine conductrice selon la revendication 1, dans laquelle
les nanofibres de polyaniline ont une température de décomposition thermique supérieure ou égale à 200 °C.

12. Composition de résine conductrice selon la revendication 1, ayant une résistance de surface inférieure ou égale à 1,0 x 10¹² Ω/sq.
